# EUROPÄISCHE PATENTANMELDUNG

(11) **EP 1 815 739 A1**
(43) Veröffentlichungstag der Anmeldung: **08.08.2007**
(21) Anmeldenummer: 07000085.6
(22) Anmeldetag: 04.01.2007
(51) Int. Cl.: A01K 63/04

(54) **Schwimmer zum Positionieren eines Sprudelsteins in einem Teich**

(30) Priorität: 01.02.2006 DE 202006001551 U
(71) Anmelder: JBL GmbH & Co. KG, 67141 Neuhofen (DE)
(72) Erfinder: Keppler, Rainer, Dr., 68766 Hockenheim (DE)
(74) Vertreter: Kesselhut, Wolf

(57) **Zusammenfassung**

Ein Schwimmer (14) zum Positionieren eines Sprudelsteins (10) in einem Teich (2), insbesondere Gartenteich, wobei der Schwimmer (14) einen Schwimmerkörper (26) aufweist, der eine gegenüber Wasser reduzierte Dichte besitzt, und der Sprudelstein (10) über einen Schlauch (8) mit Umgebungsluft (6) beaufschlagbar ist, zeichnet sich dadurch aus, dass am Schwimmerkörper (26) Haltemittel (28, 32, 34, 38a, 38b) vorgesehen sind, über die der Schlauch (8) zur Anordnung des Sprudelsteins (2) in einem vorgegebenen Abstand zum Schwimmerkörper (26) an diesem fixierbar ist.

## Beschreibung

Die Erfindung betrifft einen Schwimmer zum Positionieren eines Sprudelsteins in einem Teich, sowie eine Anordnung zur Belüftung eines solchen Teichs gemäß dem Oberbegriff von Anspruch 1 und 8.

Im Zusammenhang mit Teichen, wie z.B. Gartenteichen für Zierfische, die sich aufgrund ihrer Größe nicht in geschlossenen Räumen sondern im Freien befinden, besteht im Winter das Problem, dass die Teiche zufrieren und dadurch der Sauerstoffanteil im Wasser unter ein für Fische notwendiges Mindestmaß abfällt, so dass ein Überleben der im Bereich des Teichgrundes überwinternden Fische nicht mehr gewährleistet ist.

Um diesem Problem zu begegnen, ist es aus dem Stand der Technik bekannt, im Bereich des Teichgrundes Sprudelsteine anzuordnen, welche durch eine Luftquelle, wie beispielsweise ein elektrisches Gebläse, über einen Schlauch mit Umgebungsluft beaufschlagt werden. Die aus dem Sprudelstein in Form von Gasbläschen austretende Umgebungsluft steigt dabei im Bereich oberhalb des Sprudelsteins auf und reichert das Teichwasser mit Sauerstoff an, so dass die Sauerstoffkonzentration im Teich insgesamt erhöht wird.

Die aufsteigenden Luftblasen führen weiterhin dazu, dass die Eisdecke im Bereich oberhalb des Sprudelsteins nicht zufriert, so dass für die Fische zusätzlich ein direkter Zugang zur Umgebungsluft geschaffen wird.

Im Zusammenhang mit den zuvor beschriebenen Sprudelsteinen ergibt sich das Problem, dass diese zur Vermeidung eines Aufsteigens der Steine eine größere Dichte als Wasser besitzen müssen, wodurch diese stets bis auf den Boden oder Grund des Teichs absinken und die Umgebungsluft hierdurch unmittelbar vom Grund des Teichs aus durch sämtlich Wasserschichten hindurch aufsteigt, wodurch es zu einer Durchmischung der einzelnen Schichten kommt.

In Folge der Temperaturanomalie des Wassers ist die Dichte des Teichwassers bei einer Wassertemperatur von 4 °C am höchsten, wodurch sich dieses am Boden des Teiches absetzt. Demgegenüber können die darüber liegenden Wasserschichten bei über einen längeren Zeitraum hinweg anhaltendem Frost auch Temperaturen von weniger als 4 °C annehmen, was für die Fische mitunter zu kalt ist. Aus diesem Grunde halten sich die meisten Fische zum Überwintern in der Regel in der 4°C warmen Warmwasserzone im Bodenbereich der Gewässer auf

In diesem Zusammenhang stellt es ein Problem der bekannten Teich-Belüftungssysteme dar, dass die am Boden oder Grund der Teiche angeordneten Sprudelsteine durch die aus den Sprudelsteinen aufsteigenden Gasblasen zu einer Durchmischung des 4 °C warmen Wassers der Bodenzone mit dem kälteren Wasser in den darüber liegenden Schichten führen, wodurch auch das Wasser in der Bodenzone unter 4 °C abgekühlt wird und die Fische unterkühlen und sterben können.

Dem gemäß ist es eine Aufgabe der vorliegenden Erfindung, eine Anordnung zur Belüftung eines Teichs sowie einen in dieser verwendeten Schwimmer zu schaffen, welche beim Belüften des Teichs über einen Sprudelstein eine Durchmischung des 4 °C warmen Wassers in der Bodenzone mit Wasser aus den darüber liegenden Wasserschichten verhindern.

Diese Aufgabe wird erfindungsgemäß durch die Merkmale von Anspruch 1 und 8 gelöst.

Weitere Merkmale der Erfindung sind in den Unteransprüchen beschrieben.

Gemäß der Erfindung wird ein Sprudelstein, welcher sich am Ende eines den Sprudelstein mit Umgebungsluft beaufschlagenden Schlauchs befindet, mittels eines Schwimmers in einem vorgegebenen Abstand über dem Boden des Teichs positioniert, wozu der Schwimmer einen Schwimmerkörper mit Haltemitteln aufweist, über die der Schlauch vorzugsweise lösbar am Schwimmerkörper befestigt werden kann.

Der Schwimmerkörper, der sich dabei im eisfreien Bereich der Wasseroberfläche oberhalb des Sprudelsteins befindet, trägt hierbei den am Schlauch herabhängenden Sprudelstein, wodurch sichergestellt wird, dass der Sprudelstein stets in einem gewünschten Abstand über dem Teichboden, beispielsweise 30 cm, verbleibt. Hierdurch wird sichergestellt, dass eine Durchmischung des Wassers der Bodenzone infolge der aufsteigenden Luftblasen gänzlich verhindert wird, so dass die Fische selbst bei sehr tiefen Temperaturen sicher im vergleichsweise warmen Wasser der Bodenzone überwintern können.

Bei der bevorzugten Ausführungsform der Erfindung umfassen die am Schwimmerkörper angeordneten Haltemittel einen Führungsabschnitt, innerhalb von welchem der ansonsten flexible Luftzufuhrschlauch gegen ein Abknicken geschützt bevorzugt in Form eines Bogens geführt wird. Der Führungsabschnitt kann hierbei die Form eines bogenförmigen Hohlprofils besitzen, welches einen C-förmigen Querschnitt und beispielsweise eine Länge von 5 cm bis 10 cm oder mehr aufweisen kann, und durch welches der Luftzufuhrschlauch hindurchgeführt ist. Die sich über die gesamte Länge des Führungsabschnitts erstreckende Öffnung, durch die hindurch der Schlauch in den Führungsabschnitt eingebracht werden kann, ist dabei bevorzugt als ein im Bereich der Seitenwand des Führungsabschnitts in diese eingebrachter Schlitz ausgestaltet, dessen Breite geringfügig kleiner ist als der Außendurchmesser des Schlauchs, oder der alternativ durch einen oder mehrere im Bereich der Seitenwand geformte Vorsprünge verengt sein kann, um den Schlauch nach dem Eindrücken in den Führungsabschnitt in diesem gegen ein Herausrutschen zu fixieren.

Um eine leichte Einstellbarkeit des gewünschten Abstandes zwischen Schwimmerkörper und Sprudelstein zu ermöglichen, besitzt der Führungsabschnitt einen gegenüber dem Außendurchmesser des Schlauchs geringfügig kleineren Innendurchmesser, so dass der in den Führungsabschnitt eingezogene Schlauch aufgrund der Eigenelastizität des Schlauchmaterials innerhalb des Führungsabschnitts leicht zusammengedrückt wird und hierdurch eine reibschlüssige Verbindung zwischen der Innenseite des Führungsabschnitts und der Außenseite des Schlauchs erzeugt. Die Reibungskraft weist dabei durch eine entsprechende Wahl des Durchmessers des Führungsabschnitts und/oder dessen Krümmung eine solche Größe auf, dass ein Hindurchziehen des Schlauchs durch den Führungsabschnitt von Hand auf der einen Seite ohne Weiters möglich ist, um den Abstand zwischen Sprudelstein und Schwimmer einzustellen, auf der anderen Seite jedoch ein Durchrutschen des Schlauches infolge der Gewichtskraft des Sprudelsteins zuverlässig verhindert wird.

Anders ausgedrückt wird durch die Bereitstellung eines insbesondere als bogenförmiges Hohlprofil mit bevorzugt C-förmigem Querschitt oder auch als geschlossenes Hohlrohr ausgestalteten Führungsabschnitts sowohl ein Abknicken des flexiblen Schlauchs verhindert, als auch eine sehr komfortable und schnelle Möglichkeit zur Veränderung der Position des Sprudelsteins relativ zum Schwimmer - und damit zum Grund des Teichs - geschaffen.

Gemäß einer weiteren Ausfiihrungsform der Erfindung umfassen die Haltemittel Klemmelemente, über die der Schlauch am Schwimmerkörper festklemmbar ist.

Die Klemmelemente können hierbei z.B. zwei sich fingerartig vom Schwimmerkörper wegerstreckende Vorsprünge mit einer auf der Innenseite der äußeren Form des Schlauchs, bzw. des Führungsabschnitts angepassten Form umfassen, zwischen denen der Schlauch - gewünschten Falls auch ohne Führungsabschnitt - geklemmt wird, um diesen an einer beliebigen Position am Schwimmerkörper zu fixieren.

Bei der bevorzugten Ausführungsform der Erfindung weisen die Klemmelemente jedoch einen ersten und einen zweiten, sich vom Schwimmerkörper weg erstreckenden Vorsprung mit daran jeweils angeordneten Rastzapfen oder Rastnasen auf, die beiderseits in eine entsprechend geformte Nut am bogenförmigen Führungsabschnitt eingreifen, um den Führungsabschnitt am Schwimmerkörper zu fixieren.

Hierdurch ergibt sich der Vorteil, dass der Führungsabschnitt zur Einstellung der Position des Sprudelsteins zuerst ohne den Schwimmerkörper frei auf dem Schlauch verschoben werden kann. Nach dem Auffinden der gewünschten Position, die z.B. einem Abstand des Sprudelsteins von 30 cm über dem Grund des Teichs entspricht, kann der Führungsabschnitt dann in bequemer Weise über die Rastverbindung am Schwimmerkörper befestigt werden.

Hierbei ermöglichen die bevorzugt über die gesamte Länge des Führungsabschnitts hinweg verlaufenden Nuten eine freie Positionierung des bogenförmigen Führungsabschnitts relativ zum Schwimmerkörper, wodurch sich der Winkel zwischen dem vom Schwimmerkörper herabhängenden Schlauchabschnitt relativ zur Wasseroberfläche verändern lässt.

Nach einem weiteren der Erfindung zugrunde liegenden Gedanken umfasst eine Anordnung zur Belüftung eines Teichs eine Luftquelle, die einen im Teich angeordneten Sprudelstein über einen flexiblen Schlauch zur Erzeugung von Gasblasen mit Umgebungsluft beaufschlagt. Die Anordnung umfasst weiterhin einen Schwimmer mit einem Schwimmerkörper, an welchem Haltemittel vorgesehen sind, über die der Schlauch bevorzugt lösbar mit dem Schwimmerkörper verbunden werden kann, um den Sprudelstein in einer vorgegebenen Höhe über dem Grund des Teichs zu positionieren.

Die Erfindung wird nachfolgend mit Bezug auf die Zeichnungen anhand einer bevorzugten Ausführungsform beschrieben.

In den Zeichnungen zeigen:
- Fig. 1: Eine schematische abschnittsweise Querschnittsdarstellung eines Gartenteichs mit einer darauf gebildeten Eisschicht und einer erfindungsgemäßen Anordnung zur Belüftung des Teichs,
- Fig. 2: eine vergrößerte Querschnittsansicht des Schwimmers mit einem daran aufgenommenen bogenförmigen Führungsabschnitt, durch den ein abschnittsweise dargestellter Schlauch hindurchgeführt ist, und
- Fig. 3: eine Querschnittsansicht des Schwimmers von Fig. 2 in Höhe der Klemmelemente, welche in entsprechende seitliche Nuten eingreifen, die in einem rückenartigen Teil des Führungsabschnitts geformt sind.

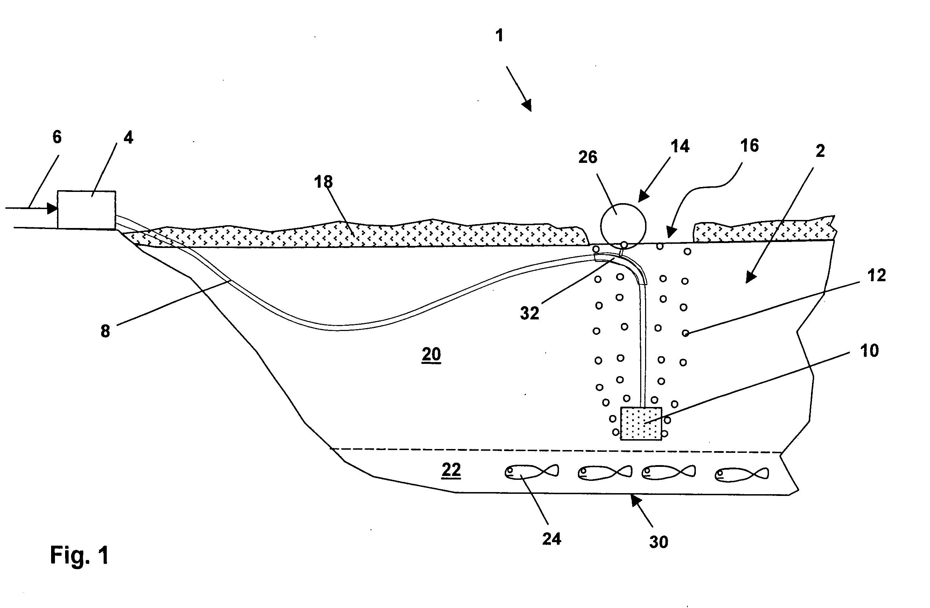

Wie in Fig. 1 gezeigt ist, umfasst eine erfindungsgemäße Anordnung 1 zur Belüftung eines Teichs 2 eine Luftquelle 4, die Umgebungsluft 6 ansaugt und diese über einen flexiblen Schlauch 8 einem bekannten Sprudelstein 10 zuführt, der beispielsweise als ein poröser, aus einem Kunststoff- oder Keramikmaterial bestehender Hohlkörper ausgestaltet ist, aus dem die zugeführte Umgebungsluft 6 in Form von Luftblasen 12 austritt. Die Luftblasen 12 steigen im Bereich oberhalb des Sprudelsteins 10 durch die darüber liegenden Wasserschichten 20 auf, und geben dabei Luftsauerstoff an das Wasser ab.

Wie der Darstellung von Fig. 1 weiterhin entnommen werden kann, umfasst die erfindungsgemäße Anordnung 1 einen Schwimmer 14, der sich im Bereich der Wasseroberfläche 16 über dem Sprudelstein 10 befindet, in dem eine den Teich 2 bedeckende Eisschicht 18 infolge der aufsteigenden Luftblasen 12 durchbrochen ist, so dass der Schwimmer 14 frei auf der Wasseroberfläche 16 schwimmt. Die Eisschicht 18 führt dazu, dass die Wasserschicht 20 oberhalb des Sprudelsteins 10 eine Temperatur besitzt, die in der Regel weniger als 4° C beträgt.

Wie der Darstellung von Fig. 1 weiterhin entnommen werden kann, ist unterhalb der kälteren Wasserschicht 20 eine Warmwasserzone 22 mit einer Temperatur von im Wesentlichen 4° C angeordnet, die von den im Teich 2 lebenden Fischen 24 zum Überwintern genutzt wird.

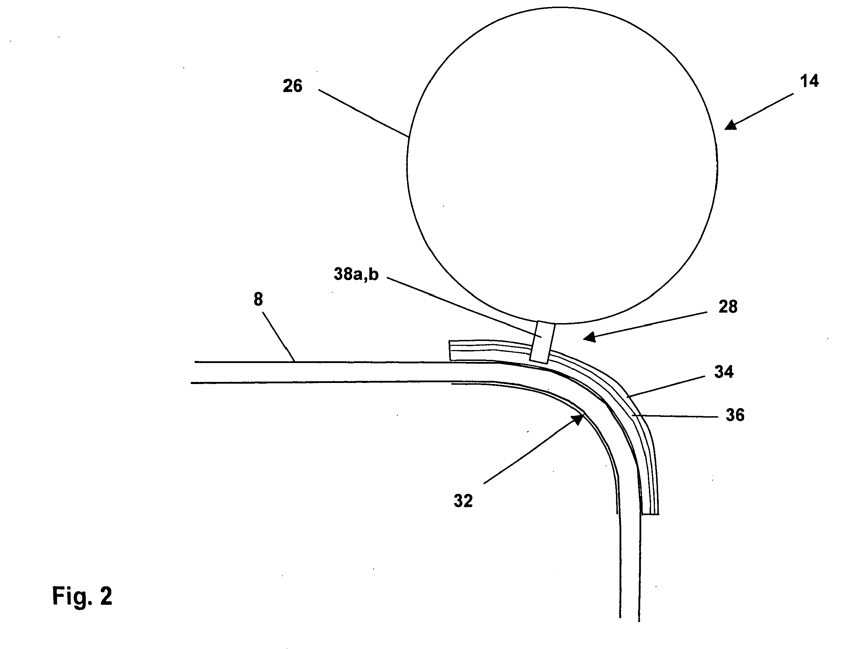

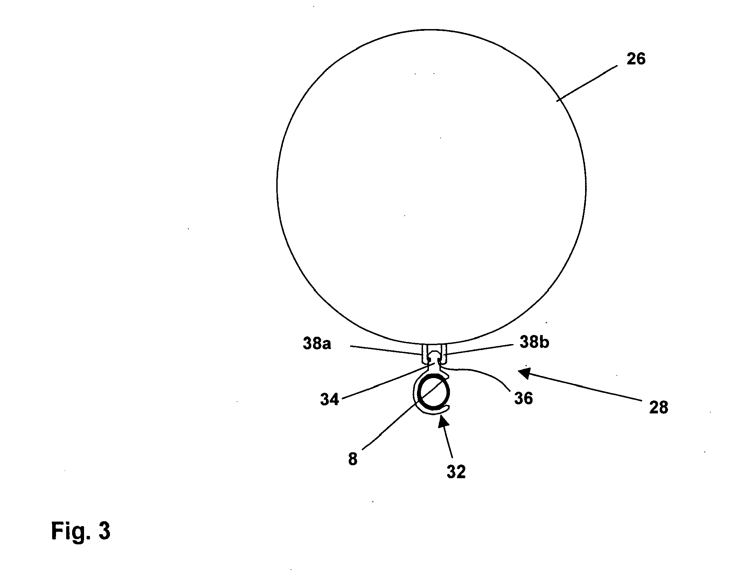

Gemäß den Darstellungen von Fig. 2 und 3 umfasst der Schwimmer 14 einen Schwimmerkörper 26, der beispielsweise als Hohlkörper aus Kunststoff, Metall oder einem anderen geeigneten Werkstoff oder auch als ein in sonstiger Weise geformter Körper aus geschäumtem Material ausgestaltet sein kann. Die Größe des Schwimmerkörpers 26 ist dabei so bemessen, dass die Gesamtdichte von Sprudelstein 10, Schlauch und Schwimmerkörper kleiner ist als die Dichte von Wasser, obgleich der Sprudelstein 10 selbst eine größere Dichte als Wasser aufweist, so dass der Schwimmerkörper 26 aufgrund des entstehenden Auftriebs zur Wasseroberfläche 16 aufsteigt und dabei den Sprudelstein 10 trägt.

Der Schwimmerkörper 26 besitzt auf seiner dem Sprudelstein 10 zugewandten Unterseite Haltemittel 28, mit denen der Schlauch 8 am Schwimmerkörper 26 bevorzugt lösbar befestigt werden kann, so dass die Länge des Schlauchabschnitts zwischen Sprudelstein 10 und Schwimmerkörper 26 veränderbar ist und der Sprudelstein 10 in erfindungsgemäßer Weise in einem vorgegebenen Abstand von beispielsweise 30 cm oberhalb des Grundes 30 des Teichs 2 positioniert werden kann.

Wie der Darstellung von Fig. 2 und 3 ferner im Detail entnommen werden kann, umfassen die Haltemittel bevorzugt einen Führungsabschnitt 32, der beispielsweise als bogenförmiges Kunststoffhohlprofil mit einem bevorzugt C-förmigen Querschnitt ausgestaltet ist, auf dessen - in radialer Richtung des Bogens gesehen - außen liegender Seite ein rückenartiger Abschnitt 34 geformt ist, in den bevorzugt beiderseits eine Nut oder Vertiefung 36 eingebracht ist, in die entsprechende Eingriffsabschnitte zur Erzeugung einer Rastverbindung zwischen dem Schwimmerkörper 14 und dem Führungsabschnitt 32 eingreifen. Die in den Zeichnungen aus darstellungstechnischen Gründen nicht näher bezeichneten Eingriffsabschnitte, die z.B. eine spitzenartige Querschnittsform aufweisen können, sind bevorzugt an einem ersten und einem zweiten fingerartigen Vorsprung 38a, 38b gebildet, der unmittelbar am Schwimmerkörper 26 geformt sein kann.

## Patentansprüche

1. Schwimmer (14) zum Positionieren eines Sprudelsteins (10) in einem Teich (2), insbesondere Gartenteich, wobei der Schwimmer (14) einen Schwimmerkörper (26) aufweist, der eine gegenüber Wasser reduzierte Dichte besitzt, und der Sprudelstein (10) über einen Schlauch (8) mit Umgebungsluft (6) beaufschlagbar ist,
**dadurch gekennzeichnet,dass**
am Schwimmerkörper (26) Haltemittel (28, 32, 34, 38a, 38b) vorgesehen sind, über die der Schlauch (8) zur Anordnung des Sprudelsteins (2) in einem vorgegebenen Abstand zum Schwimmerkörper (26) an diesem fixierbar ist.

2. Schwimmer nach Anspruch 1,
**dadurch gekennzeichnet,**
**dass** die Haltemittel einen Führungsabschnitt (32) umfassen, innerhalb von welchem der Schlauch (8) gegen ein Abknicken geschützt im Bereich des Schwimmerkörpers (26) geführt wird.

3. Schwimmer nach Anspruch 2,
**dadurch gekennzeichnet,**
**dass** der Führungsabschnitt (32) die Form eines Bogens besitzt.

4. Schwimmer nach Anspruch 2 oder 3,
**dadurch gekennzeichnet,**
**dass** der Führungsabschnitt (32) ein Hohlprofil oder Hohlrohr umfasst, welches einen gegenüber dem Außendurchmesser des Schlauchs (8) reduzierten Innendurchmesser aufweist.

5. Schwimmer nach einem der vorhergehenden Ansprüche,
**dadurch gekennzeichnet,**
**dass** die Haltemittel Klemmelemente (3,8a, 38b) umfassen, über die der Schlauch (8) am Schwimmerkörper (26) festklemmbar ist.

6. Schwimmer nach Anspruch 2 und 5,
**dadurch gekennzeichnet,**
**dass** die Klemmelemente einen ersten und zweiten Vorsprung (38a, 38b) umfassen, welche unter Erzeugung einer Rastverbindung in einen rückenartigen Abschnitt (34) des Führungsabschnitts (32) einrastbar sind.

7. Schwimmer nach Anspruch 6
**dadurch gekennzeichnet,**
**dass** an den Vorsprüngen (38a, 38b) Eingriffsabschnitte vorgesehen sind, die in eine im rückenartigen Abschnitt (34) geformte Nut (36) eingreifen.

8. Anordnung zur Belüftung eines Teichs (2), insbesondere Gartenteichs, mit einer Luftquelle (4) zum Ansaugen und Fördern von Umgebungsluft (6) sowie einem mit der Luftquelle (4) über einen Schlauch (8) verbundenen, unterhalb der Wasseroberfläche (16) des Teichs (2) angeordneten Sprudelstein (10), durch welchen hindurch die Umgebungsluft (6) in Form von Luftblasen (12) austritt,
**gekennzeichnet durch**
einen Schwimmer (14) nach einem der vorhergehenden Ansprüche, an welchem der Schlauch (8) zur Positionierung des Sprudelsteins (10) in einer vorgegebenen Höhe über dem Grund (30) des Teichs (2) befestigbar ist.
